(19) Europäisches Patentamt
European Patent Office
Office européen des brevets

(11) **EP 4 465 519 A1**

(12) **EUROPEAN PATENT APPLICATION**
published in accordance with Art. 153(4) EPC

(43) Date of publication:
**20.11.2024 Bulletin 2024/47**

(21) Application number: **22920011.8**

(22) Date of filing: **14.12.2022**

(51) International Patent Classification (IPC):
*H02P 6/28* (2016.01)

(52) Cooperative Patent Classification (CPC):
**H02P 6/28; H02P 21/18; H02P 21/20; H02P 21/22;**
**H02P 25/022**

(86) International application number:
**PCT/CN2022/138927**

(87) International publication number:
**WO 2023/134379 (20.07.2023 Gazette 2023/29)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **12.01.2022 CN 202210031645**

(71) Applicant: **Schaeffler Technologies AG & Co. KG**
**91074 Herzogenaurach (DE)**

(72) Inventor: **LV, Zhengtao**
**Shanghai 201805 (CN)**

(54) **CONTROL METHOD FOR PERMANENT MAGNET SYNCHRONOUS MOTOR, AND CONTROL MODULE**

(57) The present invention relates to a control method and control module for a permanent magnet synchronous motor. The control method comprises the following steps: obtaining a motor rotational speed, a first difference value between an actual quadrature-axis current iq and a target quadrature-axis current iq_Ref, and a second difference value between an actual direct-axis current id and a target direct-axis current id_Ref; determining whether or not the motor rotational speed is greater than or equal to a preset rotational speed threshold value; and adjusting a direct-axis voltage Ud according to the first difference value and adjusting a quadrature-axis voltage Uq according to the second difference value when the motor rotational speed is greater than or equal to the rotational speed threshold value. The control method can take into account the motor rotational speed to selectively adjust the quadrature-axis voltage Uq and the direct-axis voltage Ud on the basis of the quadrature-axis current iq or the direct-axis current id such that the fluctuation of the target quadrature-axis current iq and the actual direct-axis current id at any motor rotational speed is small.

FIG. 1

EP 4 465 519 A1

**Description**

The present application claims priority to Chinese Patent Application No. 202210031645.6, filed on January 12, 2022, and entitled "CONTROL METHOD AND CONTROL MODULE FOR PERMANENT MAGNET SYNCHRONOUS MOTOR", the entire content of which is incorporated herein into the present application by reference.

Technical Field

The present invention relates to the field of torque control of permanent magnet synchronous motors, and in particular to a control method and control module for a permanent magnet synchronous motor.

Background

In the prior art, motors have high power consumption and low energy conversion efficiency. In recent years, field-oriented control (FOC) has become increasingly popular, as the cost required for implementing the technology is no longer a constraining factor. In FOC control in the prior art, for a dq coordinate system, a direct-axis current id and a quadrature-axis current iq as well as a direct-axis voltage Ud and a quadrature-axis voltage Uq usually satisfy the following relational expressions (1) and (2):

$$Ud = Rs * id + Ld * p * id - \omega * Lq * iq \qquad (1)$$

$$Uq = Rs * iq + Lq * p * iq + \omega * Ld * id + \omega * \Phi f \qquad (2)$$

wherein, Ud represents a direct-axis voltage, Rs represents a resistance value of a stator winding, id represents a direct-axis current, Ld represents direct-axis magnetic flux, p represents a derivative operator, $\omega$ represents an electric angular speed of a rotor, Lq represents quadrature-axis magnetic flux, iq represents a quadrature-axis current, Uq represents a quadrature-axis voltage, Ld represents direct-axis magnetic flux, and $\Phi f$ represents a magnetic flux generated by a permanent magnet.

When a motor is in a steady state, a proportional-integral operator p is 0, and therefore the above-mentioned expressions (1) and (2) may be expressed as the following expressions (3) and (4), respectively:

$$Ud = Rs * id - \omega * Lq * iq \qquad (3)$$

$$Uq = Rs * iq + \omega * Ld * id + \omega * \Phi f \qquad (4)$$

If conversion is performed for the expressions (3) and (4), they may be converted into the following expressions (5) and (6):

$$iq = \frac{Rs*id-Ud}{\omega*Lq} = \frac{Rs*id}{\omega*Lq} - \frac{Ud}{\omega*Lq} \qquad (5)$$

$$id = \frac{Uq-Rs*iq-\omega\Phi f}{\omega*Ld} = \frac{Uq}{\omega*Ld} - \frac{Rs*iq}{\omega*Ld} - \frac{\Phi f}{Ld} \qquad (6)$$

However, when a motor rotational speed is high, the motor is in a flux weakening state, the direct-axis current id is required to be less than 0, and $\omega$Lq and $\omega$Ld will be much greater than the resistance value Rs of the stator winding, and therefore the above-mentioned expressions (5) and (6) may be simplified to become the following expressions (7) and (8):

$$iq \approx -\frac{Ud}{\omega Lq} \qquad (7)$$

$$id \approx \frac{Uq}{\omega Ld} - \frac{\Phi f}{Ld} \qquad (8)$$

It can be seen therefrom that when the motor rotational speed is high, the direct-axis voltage Ud depends on the quadrature-axis current iq, and the quadrature-axis voltage Uq depends on the direct-axis current id. In this case, if the quadrature-axis voltage Uq is still adjusted according to the quadrature-axis current iq and the direct-axis voltage Ud is still adjusted according to the direct-axis current id as in the prior art, this tends to make it impossible to directly adjust the actual direct-axis current id and the actual quadrature-axis current iq and therefore they fluctuate, which further leads to a large deviation between the actual direct-axis current id and a target direct-axis current id_Ref as well as a large deviation between the actual quadrature-axis current iq and a target quadrature-axis current iq_Ref, consequently causing the motor to be unable to output a stable torque.

Summary

The purpose of the present invention is to provide a control method and control module for a permanent magnet synchronous motor, which may directly control a direct-axis current id and a quadrature-axis current iq by taking into account a motor rotational speed, such that the fluctuation of an actual direct-axis current id and an actual quadrature-axis current iq at any motor rotational speed is low, and accordingly the deviation between the actual direct-axis current id and a target direct-axis current id_Ref as well as the deviation between the actual quadrature-axis current iq and a target quadrature-axis current iq_Ref are small, thereby enabling a motor to output a more stable torque.

According to an aspect of the present invention, provided is a control method for a permanent magnet synchronous motor is provided, comprising the following steps: obtaining a motor rotational speed, a first difference value between an actual quadrature-axis current iq and a target quadrature-axis current iq_Ref, and a second difference value between an actual direct-axis current id and a target direct-axis current id_Ref; determining whether or not the motor rotational speed is greater than or equal to a preset rotational speed threshold value; and adjusting a direct-axis voltage Ud according to the first difference value and adjusting a quadrature-axis voltage Uq according to the second difference value when the motor rotational speed is greater than or equal to the rotational speed threshold value.

According to a preferred embodiment of the present invention, when the motor rotational speed is greater than or equal to the rotational speed threshold value, if the first difference value between the actual quadrature-axis current iq and the target quadrature-axis current iq_Ref is less than 0, the direct-axis voltage Ud is reduced; otherwise the direct-axis voltage Ud is increased.

According to a preferred embodiment of the present invention, when the motor rotational speed is greater than or equal to the rotational speed threshold value, if the second difference value between the actual direct-axis current id and the target direct-axis current id_Ref is less than 0, the quadrature-axis voltage Uq is increased; otherwise the quadrature-axis voltage Uq is reduced.

According to a preferred embodiment of the present invention, when the motor rotational speed is less than the rotational speed threshold value, the quadrature-axis voltage Uq is adjusted according to the first difference value, and the direct-axis voltage Ud is adjusted according to the second difference value.

According to a preferred embodiment of the present invention, when the motor rotational speed is less than the rotational speed threshold value, if the first difference value between the actual quadrature-axis current iq and the target quadrature-axis current iq_Ref is less than 0, the quadrature-axis voltage Uq is increased; otherwise the quadrature-axis voltage Uq is reduced.

According to a preferred embodiment of the present invention, when the motor rotational speed is less than the rotational speed threshold value, if the second difference value between the actual direct-axis current id and the target direct-axis current id_Ref is less than 0, the direct-axis voltage Ud is increased; otherwise the direct-axis voltage Ud is reduced.

According to a preferred embodiment of the present invention, the rotational speed threshold value is 5 times the ratio of a preset resistance to a preset inductance in the permanent magnet synchronous motor.

According to another aspect of the present invention, provided is a control module for a permanent magnet synchronous motor, comprising a first controller module and a second controller module, wherein the first controller module is configured to: obtain a motor rotational speed and a first difference value between an actual quadrature-axis current iq and a target quadrature-axis current iq_Ref, determine whether or not the motor rotational speed is greater than or equal to a preset rotational speed threshold value; and adjust the direct-axis voltage Ud according to the first difference value when the motor rotational speed is greater than or equal to the rotational speed threshold value; and the second controller module is configured to: obtain the motor rotational speed and a second difference value between an actual direct-axis current id and a target direct-axis current id_Ref; determine whether or not the motor rotational speed is greater than or equal to the rotational speed threshold value; and adjust the quadrature-axis voltage Uq according to the second difference value when the motor rotational speed is greater than or equal to the rotational speed threshold value.

According to a preferred embodiment of the present invention, the first controller module is configured to: when the motor rotational speed is greater than or equal to the rotational speed threshold value, if the first difference value is less than 0, reduce the direct-axis voltage Ud, or otherwise increase the direct-axis voltage Ud; and the second controller module is configured to: when the motor rotational speed is greater than or equal to the rotational speed threshold value, if the second difference value is less than 0, increase the quadrature-axis voltage Uq, or otherwise reduce the quadrature-axis voltage Uq.

According to a preferred embodiment of the present invention, the first controller module is configured to: adjust the quadrature-axis voltage Uq according to the first difference value when the motor rotational speed is less than the rotational speed threshold value; and the second controller module is configured to: adjust the direct-axis voltage Ud according to the second difference value.

As stated above, for different motor rotational speeds, the control method and control module according to the present invention may directly control the direct-axis voltage Ud and the quadrature-axis voltage Uq, respectively, by using different parameters, such that the deviation between the actual direct-axis current id and the target direct-axis current id_Ref as well as the deviation between the actual quadrature-axis current iq and the target quadrature-axis current iq_Ref are small, thereby facilitating the outputting of a more stable motor torque by the motor.

Brief Description of the Drawings

Features, advantages, and technical effects of exemplary embodiments of the present invention will be described below with reference to the accompanying drawings.

FIG. 1 shows a structural schematic diagram of an FOC-based control system; and
FIG. 2 shows a schematic flowchart of a control method according to the present invention.

Detailed Description

The implementation of the present invention will be described in further detail below in combination with the accompanying drawings and embodiments. The detailed description of the following embodiments and the accompanying drawings are used to exemplarily illustrate the principles of the present invention, but cannot be used to limit the scope of the present invention, that is, the present invention is not limited to the described embodiments.

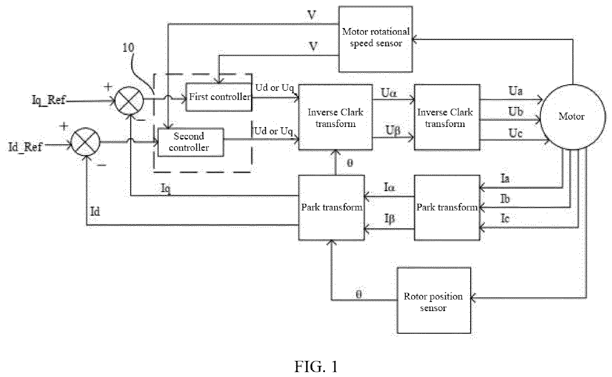

FIG. 1 shows a structural schematic diagram of an FOC-based control system. This control system is used in particular for a permanent magnet synchronous motor. Therefore, a permanent magnet synchronous motor is taken as an example of all of the motors mentioned below. As shown in FIG. 1, the control system comprises: a motor, a motor rotational speed sensor module, a rotor position sensor module, a Clark transform module, a Park transform module, a first feedback module, a second feedback module, a first controller module, a second controller module, an inverse Park transform module, and an inverse Clark transform module, wherein the first controller module and the second controller module constitute a control module 10 according to the present invention.

An input end of the motor rotational speed sensor module is connected to the motor, and an output end of the motor rotational speed sensor module is connected to the first controller module and the second controller module, respectively. Therefore, the motor rotational speed sensor module may obtain a motor rotational speed of the motor, and output the same to the first controller module and the second controller module.

An input end of the rotor position sensor module is connected to the motor, and an output end of the rotor position sensor module is connected to the Park transform module and the inverse Park transform module. Therefore, the rotor position sensor module may obtain an angular position of a rotor of the motor, and output the same to the Park transform module and the inverse Park transform module.

An input end of the Clark transform module is connected to the motor, and may obtain three-phase stator currents ia, ib and ic of the motor. The three-phase stator currents ia, ib and ic are based on a natural coordinate system with a stator as a reference object, and satisfy the following relational expression according to Kirchhoff's current law:

$$ia + ib + ic = 0;$$

and then, the Clark transform module may convert the three-phase stator currents ia, ib and ic in the natural coordinate system into current components $i\alpha$ and $i\beta$ in an $\alpha\beta$ coordinate system, which is stationary relative to the stator of the motor, according to the following relational expressions:

$$i\alpha = ia;$$

$$\mathrm{i}\beta = \frac{1}{\sqrt{3}}\,\mathrm{ia} + \frac{2}{\sqrt{3}}\,\mathrm{ib}.$$

An output end of the Clark transform module is connected to an input end of the Park transform module, and therefore the Park transform module may transform the current components iα and iβ in the αβ coordinate system into an actual direct-axis current id and an actual quadrature-axis current iq in a dq coordinate system, which rotates relative to the stator but is stationary relative to the rotor, on the basis of a position angle θ of the rotor received from the rotor position sensor module and according to the following relational expressions:

$$\mathrm{id} = \mathrm{i}\alpha\cos\theta + \mathrm{i}\beta\sin\theta;$$

$$\mathrm{iq} = \mathrm{i}\alpha\sin\theta + \mathrm{i}\beta\cos\theta.$$

An output end of the Park transform module is connected to the first feedback module and the second feedback module, respectively, such that the actual quadrature-axis current iq and the actual direct-axis current id are output to the first feedback module and the second feedback module, respectively.

In addition, an input end of the first feedback module is further connected to an external input to obtain a preset target quadrature-axis current iq_Ref, and therefore the first feedback module may compare the actual quadrature-axis current iq with the target quadrature-axis current iq_Ref, and can calculate a first difference value between the actual quadrature-axis current iq and the target quadrature-axis current iq_Ref.

Similarly, an input end of the second feedback module is also connected to the external input to obtain a preset target direct-axis current id_Ref, and therefore the second feedback module may compare the actual direct-axis current id with the target direct-axis current id_Ref, and can calculate a second difference value between the actual direct-axis current id and the target direct-axis current id_Ref.

The first controller module and the second controller module are connected to the output end of the motor rotational speed sensor module, respectively, to obtain an actual motor rotational speed. In addition, the first controller module is connected to the first feedback module to receive the first difference value between the actual quadrature-axis current iq and the target quadrature-axis current iq_Ref, and the second controller module is connected to the second feedback module to receive the second difference value between the actual direct-axis current id and the target direct-axis current id_Ref. The first controller module and the second controller module constitute the control module 10 of the present invention.

After receiving the actual motor rotational speed, the first controller module first determines whether the motor rotational speed is greater than or equal to a preset rotational speed threshold value. The rotational speed threshold value here is generally greater than or equal to a flux weakening rotational speed, preferably equal to 5 times a ratio of a preset resistance to a preset inductance in the permanent magnet synchronous motor. Different motors have different rotational speed threshold values, and therefore the rotational speed threshold values may be preset at factories.

When the actual motor rotational speed is determined to be greater than or equal to the rotational speed threshold value, the motor is in a flux weakening state, the first controller module is configured to adjust a direct-axis voltage Ud according to the first difference value between the actual quadrature-axis current iq and the target quadrature-axis current iq_Ref. Specifically, the first controller module may be a proportional-integral-derivative (PID) controller, which can perform proportional-integral iteration on the first difference value between the actual quadrature-axis current iq and the target quadrature-axis current iq_Ref from the first feedback module so as to adjust the direct-axis voltage Ud.

For example, when the actual motor rotational speed is greater than or equal to the rotational speed threshold value, if the first difference value between the actual quadrature-axis current iq and the target quadrature-axis current iq_Ref is less than 0, this means that the actual quadrature-axis current iq is less than the target quadrature-axis current iq_Ref, so in this case, the actual quadrature-axis current iq is required to be increased; and since the actual quadrature-axis current iq satisfies the above-mentioned expression (7) when the motor is in a flux weakening state, the direct-axis voltage Ud is required to be reduced in order to increase the actual quadrature-axis current iq. Therefore, when the motor rotational speed is greater than or equal to the rotational speed threshold value, if the first difference value between the actual quadrature-axis current iq and the target quadrature-axis current iq_Ref is less than 0, the first controller module is configured to reduce the direct-axis voltage Ud. Conversely, when the motor rotational speed is greater than or equal to the rotational speed threshold value, if the first difference value between the actual quadrature-axis current iq and the target quadrature-axis current iq_Ref is greater than 0, this means that the actual quadrature-axis current iq is greater than the target quadrature-axis current iq_Ref, so in order to reduce the actual quadrature-axis current iq, it can be seen from the above-mentioned expression (7) that the first controller module is configured such that the direct-axis voltage Ud is required to be increased. Moreover, when the motor rotational speed is greater than or equal to the rotational speed threshold value, if the first difference value between the actual quadrature-axis current iq and the target quadrature-axis current iq_Ref is equal to 0, this means that the actual quadrature-axis current iq is equal to the target quadrature-axis current iq_Ref, so in this case, the first controller module is configured such that adjusting of the direct-axis voltage Ud is not required.

Furthermore, when it is determined that the actual motor rotational speed is less than the rotational speed threshold value, the first controller module adjusts the quadrature-axis voltage Uq according to the quadrature-axis current iq. Similarly, the first controller module may perform proportional-integral iteration on the first difference value between the actual quadrature-axis current iq and the target quadrature-axis current iq_Ref from the first feedback module so as to adjust the quadrature-axis voltage Uq.

For example, when the actual motor rotational speed is less than the rotational speed threshold value, if the first difference value between the actual quadrature-axis current iq and the target quadrature-axis current iq_Ref is less than 0, this means that the actual quadrature-axis current iq is less than the target quadrature-axis current iq_Ref, so in this case, the actual quadrature-axis current iq is required to be increased; and in this case, since the quadrature-axis current iq satisfies the above-mentioned expression (2), the quadrature-axis voltage Uq is required to be increased in order to increase the actual quadrature-axis current iq. Therefore, when the motor rotational speed is less than the rotational speed threshold value, if the first difference value between the actual quadrature-axis current iq and the target quadrature-axis current iq_Ref is less than 0, the first controller module is configured to increase the quadrature-axis voltage Uq. Conversely, when the motor rotational speed is less than the rotational speed threshold value, if the first difference value between the actual quadrature-axis current iq and the target quadrature-axis current iq_Ref is greater than 0, this means that the actual quadrature-axis current iq is greater than the target quadrature-axis current iq_Ref, so in order to reduce the actual quadrature-axis current iq, it can be seen from the above-mentioned expression (2) that the first controller module is configured such that the quadrature-axis voltage Uq is required to be reduced.

Similarly, after receiving the actual motor rotational speed, the second controller module also first determines whether the motor rotational speed is greater than or equal to the preset rotational speed threshold value. When the actual motor rotational speed is determined to be greater than or equal to the rotational speed threshold value, the second controller module is configured to adjust the quadrature-axis voltage Uq according to the second difference value between the actual direct-axis current id and the target direct-axis current id_Ref. Specifically, the second controller module may be a PID controller, which can perform proportional-integral iteration on the second difference value between the actual direct-axis current id and the target direct-axis current id_Ref from the second feedback module so as to adjust the quadrature-axis voltage Uq.

For example, when the actual motor rotational speed is greater than or equal to the rotational speed threshold value, if the second difference value between the actual direct-axis current id and the target direct-axis current id_Ref is less than 0, this means that the actual direct-axis current id is less than the target direct-axis current id_Ref, so in this case the actual direct-axis current id is required to be increased; and since the actual direct-axis current id satisfies the above-mentioned expression (8) when the motor is in a flux weakening state, the quadrature-axis voltage Uq is required to be increased in order to increase the actual direct-axis current id. Therefore, when the motor rotational speed is greater than or equal to the rotational speed threshold value, if the second difference value between the actual direct-axis current id and the target direct-axis current id_Ref is less than 0, the second controller module is configured to increase the quadrature-axis voltage Uq. Conversely, when the motor rotational speed is greater than or equal to the rotational speed threshold value, if the second difference value between the actual direct-axis current id and the target direct-axis current id_Ref is greater than 0, this means that the actual direct-axis current id is greater than the target direct-axis current id_Ref, so in order to reduce the actual direct-axis current id, it can be seen from the above-mentioned expression (8) that the second controller module is configured such that the quadrature-axis voltage Uq is required to be reduced. Moreover, when the motor rotational speed is greater than or equal to the rotational speed threshold value, if the second difference value between the actual direct-axis current id and the target direct-axis current id _Ref is equal to 0, this means that the actual direct-axis current id is equal to the target direct-axis current id_Ref, so in this case the second controller module is configured such that adjusting of the quadrature-axis voltage Uq is not required.

Furthermore, when the actual motor rotational speed is determined to be less than the rotational speed threshold value, the second controller module adjusts the direct-axis voltage Ud according to the direct-axis current id. Similarly, the second controller module may perform proportional-integral iteration on the second difference value between the actual direct-axis current id and the target direct-axis current id_Ref from the second feedback module so as to adjust the direct-axis voltage Ud.

For example, when the actual motor rotational speed is less than the rotational speed threshold value, if the second difference value between the actual direct-axis current id and the target direct-axis current id_Ref is less than 0, this means that the actual direct-axis current id is less than the target direct-axis current id_Ref, so in this case, the actual direct-axis current id is required to be increased; and in this case, since the direct-axis current id satisfies the above-mentioned expression (1), the direct-axis voltage Ud is required to be increased in order to increase the actual direct-axis current id. Therefore, when the motor rotational speed is less than the rotational speed threshold value, if the second difference value between the actual direct-axis current id and the target direct-axis current id_Ref is less than 0, the second controller module is configured to increase the direct-axis voltage Ud. Conversely, when the motor rotational speed is less than the rotational speed threshold value, if the second difference value between the actual direct-axis current id and the target direct-axis current id_Ref is greater than 0, this means that the actual quadrature-axis current iq is greater than the target quadrature-axis current iq_Ref, and it can be seen from the above-mentioned expression (1) that the second controller module is configured such that the direct-axis voltage Ud is required to be reduced.

Subsequently, the first controller module and a second controller are connected to the inverse Park transform module, respectively, and therefore the adjusted direct-axis voltage Ud and quadrature-axis voltage Uq may be output to the inverse Park transform module. Then, the inverse Park transform module may transform the direct-axis voltage Ud and the quadrature-axis voltage Uq in the dq coordinate system to voltage components Uα and Uβ in the αβ coordinate system on the basis of the position angle θ of the rotor received from the rotor position sensor module and according to the following relational expressions:

$$\mathrm{U}\alpha = \mathrm{Ud}\cos\theta - \mathrm{Uq}\sin\theta;$$

$$\mathrm{U}\beta = \mathrm{Ud}\sin\theta + \mathrm{Uq}\cos\theta.$$

The inverse Park transform module is connected to the inverse Clark transform module, and therefore the voltage components Uα and Uβ in the αβ coordinate system may be output to the inverse Clark transform module. Then, the inverse Clark transform module may transform the voltage components Uα and Uβ in the αβ coordinate system into three-phase voltage values Ua, Ub and Uc in the natural coordinate system, and then output the three-phase voltage values Ua, Ub and Uc to the motor.

After receiving the adjusted three-phase voltage values Ua, Ub and Uc, the motor outputs the three-phase stator currents ia, ib and ic again, and the control system may execute the above-mentioned control again according to the output three-phase stator currents ia, ib and ic again such that the difference value between the actual direct-axis current id and the target direct-axis current id_Ref and the difference value between the actual quadrature-axis current iq and the target quadrature-axis current iq_Ref are small, thereby facilitating the outputting of a more stable torque by the motor.

Accordingly, the above-mentioned FOC-based control system may perform Clark transform, Park transform, PID control, inverse Park transform and inverse Clark transform on a current of the motor, respectively, such that the actual current of the motor is closer to a target current, thereby controlling the motor to output a constant electromagnetic torque, ensuring that the torque generated per unit stator current is maximized, and greatly improving motor efficiency.

In particular, the control module according to the present invention may directly control the direct-axis voltage Ud and the quadrature-axis voltage Uq for different motor rotational speed values, that is, when the motor rotational speed is greater than or equal to the preset rotational speed threshold value, the PID controller adjusts the direct-axis voltage Ud according to the quadrature-axis current iq and adjusts the quadrature-axis voltage Uq according to the direct-axis current id, and when the motor rotational speed is less than the rotational speed threshold value, the PID controller adjusts the quadrature-axis voltage Uq according to the quadrature-axis current iq and adjusts the direct-axis voltage Ud according to the direct-axis current id. Accordingly, regardless of the motor rotational speed, the control module according to the present invention may more directly and quickly adjust the direct-axis voltage Ud and the quadrature-axis voltage Uq such that the direct-axis current id and quadrature-axis current iq output the next time by the motor are closer to the target direct-axis current id_Ref and the target quadrature-axis current iq_Ref, thereby ensuring that the direct-axis current id and quadrature-axis current iq output each time have low fluctuation at any motor speed, and thereby more effectively facilitating the outputting of a constant electromagnetic torque by the motor.

Furthermore, the control module according to the present invention may be implemented by computer software modules, and functional modules and module units comprised therein can all correspond to specific hardware circuits in an integrated circuit structure; and owing to this solving the corresponding technical problems and obtaining the corresponding technical effects involve not only improvements of the specific hardware circuits, but also applications of control software or computer programs, that is, the present invention may use improvements in the hardware circuit structures involved in these modules and units and improvements of corresponding computer programs to solve the technical problem to be solved and obtain the corresponding technical effects.

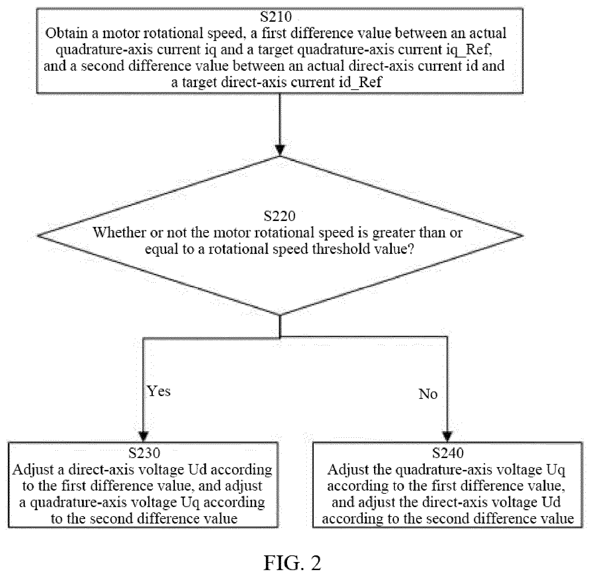

The control method according to the present invention is described below with reference to the flowchart in FIG. 2, wherein the control method is implemented by the above-mentioned control module 10, which comprises the first controller module and the second controller module. As shown in FIG. 2, in step S210, the motor rotational speed, the first difference value between the actual quadrature-axis current iq and the target quadrature-axis current iq_Ref, and a second difference between the actual direct-axis current id and the target direct-axis current id_Ref are obtained. In step S220, whether the motor rotational speed is greater than or equal to the preset rotational speed threshold value is determined.

If it is determined in step S220 that the motor rotational speed is greater than or equal to the rotational speed threshold value, the direct-axis voltage Ud is adjusted by the first controller module according to the first difference value, and the quadrature-axis voltage Uq is adjusted by the second controller module according to the second difference value (i.e., step S230). If it is determined in step S220 that the motor rotational speed is less than the rotational speed threshold value, the quadrature-axis voltage Uq is adjusted by the first controller module according to the first difference value, and the direct-axis voltage Ud is adjusted by the second controller module according to the second difference value (i.e., step S240). For the specific adjustment process, refer to the above descriptions of the first controller module and the second controller module. The specifics thereof are omitted below.

Accordingly, regardless of the rotational speed at which the motor rotates, the control method according to the present invention may more directly and quickly adjust the direct-axis voltage Ud and the quadrature-axis voltage Uq such that the direct-axis current id and quadrature-axis current iq output the next time by the motor are closer to the target direct-axis current id_Ref and the target quadrature-axis current iq_Ref, thereby ensuring that the direct-axis current id and quadrature-axis current iq output each time have low fluctuation at any motor speed, and thereby more effectively facilitating the outputting of a constant electromagnetic torque by the motor.

Although the present invention has been described with reference to the preferred embodiments, various improvements can be made and components therein may be replaced with equivalents without departing from the scope of the present invention, and in particular, as long as there is no structural conflict, the technical features mentioned in the embodiments may be combined in any way. The present invention is not limited to the specific embodiments disclosed herein, but shall include all technical solutions falling within the scope of the claims.

**Claims**

1. A control method for a permanent magnet synchronous motor, comprising the following steps:

    obtaining a motor rotational speed, a first difference value between an actual quadrature-axis current iq and a target quadrature-axis current iq_Ref, and a second difference value between an actual direct-axis current id and a target direct-axis current id_Ref;
    determining whether or not the motor rotational speed is greater than or equal to a preset rotational speed threshold value; and
    adjusting a direct-axis voltage Ud according to the first difference value and adjusting a quadrature-axis voltage Uq according to the second difference value when the motor rotational speed is greater than or equal to the rotational speed threshold value.

2. The control method according to Claim 1, wherein,
    when the motor rotational speed is greater than or equal to the rotational speed threshold value, if the first difference value between the actual quadrature-axis current iq and the target quadrature-axis current iq_Ref is less than 0, the direct-axis voltage Ud is reduced; otherwise the direct-axis voltage Ud is increased.

3. The control method according to Claim 1, wherein,
    when the motor rotational speed is greater than or equal to the rotational speed threshold value, if the second difference value between the actual direct-axis current id and the target direct-axis current id_Ref is less than 0, the quadrature-axis voltage Uq is increased; otherwise the quadrature-axis voltage Uq is reduced.

4. The control method according to Claim 1, further comprising the following steps:
    adjusting the quadrature-axis voltage Uq according to the first difference value and adjusting the direct-axis voltage Ud according to the second difference value when the motor rotational speed is less than the rotational speed threshold value.

5. The control method according to Claim 4, wherein,
    when the motor rotational speed is less than the rotational speed threshold value, if the first difference value between the actual quadrature-axis current iq and the target quadrature-axis current iq_Ref is less than 0, the quadrature-axis voltage Uq is increased; otherwise the quadrature-axis voltage Uq is reduced.

6. The control method according to Claim 4, wherein,
    when the motor rotational speed is less than the rotational speed threshold value, if the second difference value between the actual direct-axis current id and the target direct-axis current id_Ref is less than 0, the direct-axis voltage Ud is increased; otherwise the direct-axis voltage Ud is reduced.

7. The control method according to any one of Claims 1 to 6, wherein
the rotational speed threshold value is 5 times the ratio of a preset resistance to a preset inductance in the permanent magnet synchronous motor.

8. A control module for a permanent magnet synchronous motor, comprising a first controller module and a second controller module, wherein
the first controller module is configured to:

obtain a motor rotational speed and a first difference value between an actual quadrature-axis current iq and a target quadrature-axis current iq_Ref;
determine whether or not the motor rotational speed is greater than or equal to a preset rotational speed threshold value; and
adjust the direct-axis voltage Ud according to the first difference value when the motor rotational speed is greater than or equal to the rotational speed threshold value; and
the second controller module is configured to:

obtain the motor rotational speed and a second difference value between an actual direct-axis current id and a target direct-axis current id_Ref,
determine whether or not the motor rotational speed is greater than or equal to the rotational speed threshold value; and
adjust the quadrature-axis voltage Uq according to the second difference value when the motor rotational speed is greater than or equal to the rotational speed threshold value.

9. The control module according to Claim 8, wherein

the first controller module is configured to: when the motor rotational speed is greater than or equal to the rotational speed threshold value, if the first difference value is less than 0, reduce the direct-axis voltage Ud, or otherwise increase the direct-axis voltage Ud; and
the second controller module is configured to: when the motor rotational speed is greater than or equal to the rotational speed threshold value, if the second difference value is less than 0, increase the quadrature-axis voltage Uq, or otherwise reduce the quadrature-axis voltage Uq.

10. The control module according to Claim 8 or 9, wherein
the first controller module is configured to: adjust the quadrature-axis voltage Uq according to the first difference value when the motor rotational speed is less than the rotational speed threshold value; and the second controller module is configured to: adjust the direct-axis voltage Ud according to the second difference value.

FIG. 1

```
┌─────────────────────────────────────────────────────────────────┐
│                              S210                                 │
│  Obtain a motor rotational speed, a first difference value        │
│  between an actual quadrature-axis current iq and a target        │
│  quadrature-axis current iq_Ref, and a second difference value    │
│  between an actual direct-axis current id and a target            │
│  direct-axis current id_Ref                                       │
└─────────────────────────────────────────────────────────────────┘
                                 │
                                 ▼
                    ╱────────────────────────╲
                   ╱          S220             ╲
                  ╱  Whether or not the motor    ╲
                  ╲  rotational speed is greater  ╱
                   ╲ than or equal to a          ╱
                    ╲ rotational speed threshold ╱
                     ╲ value?                   ╱
                      ╲────────────────────────╱
                         │                 │
                       Yes                 No
                         │                 │
                         ▼                 ▼
```

| S230 Adjust a direct-axis voltage Ud according to the first difference value, and adjust a quadrature-axis voltage Uq according to the second difference value | S240 Adjust the quadrature-axis voltage Uq according to the first difference value, and adjust the direct-axis voltage Ud according to the second difference value |

FIG. 2

## INTERNATIONAL SEARCH REPORT

| International application No. |
| --- |
| **PCT/CN2022/138927** |

### A. CLASSIFICATION OF SUBJECT MATTER

H02P 6/28(2016.01)i

According to International Patent Classification (IPC) or to both national classification and IPC

### B. FIELDS SEARCHED

Minimum documentation searched (classification system followed by classification symbols)

IPC: H02P

Documentation searched other than minimum documentation to the extent that such documents are included in the fields searched

Electronic data base consulted during the international search (name of data base and, where practicable, search terms used)

CNPAT, CNKI, WPI, VEN, IEEE: 永磁, 同步, 控制, 转速, 交轴, 直轴, d轴, q轴, 电流, 差值, 转速, 速度, 电压, 弱磁, 调速, PID, permanent, control, motor, shaft, current, voltage

### C. DOCUMENTS CONSIDERED TO BE RELEVANT

| Category* | Citation of document, with indication, where appropriate, of the relevant passages | Relevant to claim No. |
| --- | --- | --- |
| Y | CN 113241987 A (GUANGDONG MIDEA WHITE ELECTRICAL APPLIANCE TECHNOLOGY INNOVATION CENTER CO., LTD. et al.) 10 August 2021 (2021-08-10) description, paragraph [0029], and figure 1 | 1-10 |
| Y | CN 109873590 A (XIANGTAN UNIVERSITY) 11 June 2019 (2019-06-11) description, paragraphs [0038]-[0042] | 1-10 |
| Y | CN 110518850 A (GUILIN UNIVERSITY OF ELECTRONIC TECHNOLOGY) 29 November 2019 (2019-11-29) description, paragraphs [0004]-[0021] | 1-10 |
| A | CN 107046386 A (NANJING YUEBOO POWER SYSTEM CO., LTD.) 15 August 2017 (2017-08-15) entire document | 1-10 |
| A | CN 107404273 A (AUX AIR CONDITIONER CO., LTD.) 28 November 2017 (2017-11-28) entire document | 1-10 |
| A | US 2008024082 A1 (HONDA MOTOR CO., LTD.) 31 January 2008 (2008-01-31) entire document | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **02 March 2023** | **08 March 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

<div align="center">

**INTERNATIONAL SEARCH REPORT**
**Information on patent family members**

</div>

| Patent document cited in search report | | | Publication date (day/month/year) | Patent family member(s) | | | Publication date (day/month/year) |
|---|---|---|---|---|---|---|---|
| CN | 113241987 | A | 10 August 2021 | WO | 2022237828 | A1 | 17 November 2022 |
| CN | 109873590 | A | 11 June 2019 | None | | | |
| CN | 110518850 | A | 29 November 2019 | None | | | |
| CN | 107046386 | A | 15 August 2017 | None | | | |
| CN | 107404273 | A | 28 November 2017 | None | | | |
| US | 2008024082 | A1 | 31 January 2008 | US | 7583048 | B2 | 01 September 2009 |
| | | | | JP | 2007259549 | A | 04 October 2007 |
| | | | | JP | 4754378 | B2 | 24 August 2011 |
| | | | | DE | 102007013577 | A1 | 18 October 2007 |
| | | | | DE | 102007013577 | B4 | 22 June 2011 |

Form PCT/ISA/210 (patent family annex) (July 2022)

**EP 4 465 519 A1**

**Patent documents cited in the description**

- CN 202210031645